(19) Europäisches Patentamt
European Patent Office
Office européen des brevets

(11) Publication number: 0 094 153 A2

# (12) EUROPEAN PATENT APPLICATION

(21) Application number: 83302070.4

(22) Date of filing: 13.04.83

(51) Int. Cl.[3]: C 08 G 77/20, C 08 G 77/14, C 08 G 77/38, G 02 B 1/04, G 02 C 7/04, B 29 D 11/00

(30) Priority: 10.05.82 US 376450

(43) Date of publication of application: 16.11.83 Bulletin 83/46

(84) Designated Contracting States: DE FR GB

(71) Applicant: DOW CORNING CORPORATION, 3901 S. Saginaw Road, Midland Michigan 48640 (US)

(72) Inventor: Mitchell, Darrel Duane, 304 Leonard Lane, Midland Michigan 48640 (US)

(74) Representative: Laredo, Jack Joseph et al, Elkington and Fife High Holborn House 52/54 High Holborn, London, WC1V 6SH (GB)

## (54) Inherently wettable silicone resin optical devices.

(57) This invention provides oxygen permeable, inherently wettable optical devices useful as corneal, scleral or intraocular lenses. The lenses are composed of a cured polysiloxane resin having a water-in-air contact angle no greater than 80°. The polysiloxane resin is prepared from an acrylate-functional polysiloxane composition containing at least 30 mole percent of $H_2C=CRCOOR'SiO_{1.5}$ units and any remaining siloxane units present in the composition are $R''SiO_{1.5}$ $R''_2SiO$ and/or $R''_3SiO_{0.5}$ where each R is –H or –Ch$_3$, each R' is a divalent alkylene radical of 1 to 4 carbon atoms and each R'' is an alkyl or haloalkyl radical of from 1 to 3 carbon atoms, a phenyl radical or hydrogen. The inherent wettability results from the level of the specific type of acrylate-functional siloxane units present. In an alternative embodiment, the physical properties of the device are improved by the inclusion of up to 30 weight percent of compatible aliphatically unsaturated organic compound such as methyl methacrylate.

EP 0 094 153 A2

# INHERENTLY WETTABLE SILICONE RESIN OPTICAL DEVICES

This invention relates to an oxygen permeable polysiloxane resin eye contact or intraocular lens which is inherently wettable by human tear fluid by virtue of the presence of a specific type and amount of acrylate-functional siloxane units. Optionally, unsaturated organic monomers can be included in the curable compositions to improve the physical properties of the lenses. This invention also relates to the curable compositions themselves.

Oxygen permeable silicone resin optical devices manufactured from phenyl-containing polysiloxane resins are described in U.S. Pat. No. 4,198,131 (Birdsall et al., issued April 15, 1980). Since silicone materials can possess a high degree of oxygen permeability, this property makes such materials highly desirable for use in the manufacture of eye contact lenses. Hard silicone resin contact lenses of the Birdsall et al. type are also desirable because they are useful in correcting significant amounts of astigmatism because the hard lens does not conform to the shape of the cornea in the manner that soft lenses typically do.

The silicone resin materials taught by Birdsall et al. have a disadvantage in that the surfaces of such silicone resins are not considered to be wettable by water or by human tear fluid. Human tear fluid contains mucus which tends to render surfaces to which the tear fluid is exposed more wettable by the aqueous tear fluid than by water alone. Thus, a lens surface which may only be marginally

wettable by water may be completely wetted by human tear fluid and is therefore useful as, for example, a corneal (eye) contact lens material.

The terms "hydrophilic" and "hydrophobic" are often used in the field of eye contact lenses to describe the surface wettability of the devices, but the terms have been given many meanings. For the purposes of the present invention, the term "hydrophobic" shall mean that the lens surface possesses an advancing water-in-air contact angle greater than 80° at room temperature (21°±2°C) and a lens surface is considered to be "hydrophilic" if the contact angle is no greater than 80° at room temperature (21°±2°C). Thus, if a biocompatible lens material is found to be "hydrophilic", this is taken to mean that one can expect that it is reasonable to go further and to confirm that the surface is "inherently wettable by human tear fluid" by inserting the lens (manufactured to the proper prescription)--after it has been sterilized and equilibrated with an aqueous liquid such as water, isotonic saline solution or a contact lens soaking or wetting solution--on the eye of several patients.

The surface of the lens is observed to ascertain whether or not there is an absence of dry or non-wetted areas on the surface of the lens and whether or not a continuous tear film is formed over the entire exposed lens surface for a period of time which is at least equal to the average time between the blinking of a human eye, i.e., the Tear-Film Break-Up-Time (T.F.B.U.T.). For the purposes of this invention, an acceptable T.F.B.U.T. shall be at least 5 seconds --which corresponds to an average blink rate of

about 12 times per minute--and preferably greater than 7 seconds. If no dry or non-wetting areas are observed and if a continuous tear film is observed for a period of time that is greater than the T.F.B.U.T., then the lens is deemed to be "inherently wettable by human tear fluid" for the purposes of the present invention. The lens must be "inherently wettable" to fall within the scope of the present invention. There may be other ways besides advancing water-in-air contact angle to indicate that a lens has a surface energy or amount of hydrophilicity which could render it "inherently wettable", but the use of a water-in-air contact angle to indicate that the resins employed in the present invention should be empirically tested for inherent wettability is deemed to be the best approach.

Because eye contact lenses must be wettable by human tears to be comfortably worn for a reasonable amount of time, the Birdsall et al. patent teaches that the lens surfaces should be "rendered hydrophilic" in accordance with the Gesser et al. process of U.S. Pat. No. 3,925,178 (issued December 9, 1975) or by some other standard technique. See also U.S. Pat. Nos. 4,217,038 (Letter et al., issued August 12, 1980) and 3,916,033 (Merrill, issued October 10, 1975). The aforementioned patents describe surface treatment processes which render the lens surfaces wettable to a short depth from the surface, but leave the underlying substrate hydrophobic. The hydrophobic underlying substrate is a disadvantage because in the event that the contact lens should become scratched or if an eye care practitioner should later desire to reshape the lens to better conform the lens to the wearer's eye by

removing a small portion of the lens surface, such occurrences can result in the exposure of the hydrophobic substrate and necessitate another treatment to again make the lens wettable and suitable for wear.

Hard contact lenses manufactured from polymethylmethacrylate can be tolerated in the eye for reasonably long periods of time (reported water contact angle values range from 55°-65°), but this very well known organic hard contact lens material is not considered to be oxygen permeable. Other organic monomers such as 2-hydroxyethyl methacrylate which contain hydrophilic hydroxyl groups can be employed to impart inherent and/or increased wettability to hard organic contact lens materials since the hydrophilic groups are dispersed throughout the material and are not present only on the surface. However, such hard materials generally do not possess the oxygen permeability obtainable from silicone materials of the Birdsall et al. type. In an attempt to obtain a hard contact lens material which is inherently wettable throughout the lens and is also more oxygen permeable than organic lens materials such as polymethylmethacrylate, copolymers of siloxanyl alkyl ester monomers and organic unsaturated monomers such as esters of acrylic and methacrylic acid have been employed to provide hard wettable contact lens materials which also possess a greater degree of oxygen permeability as a result of the presence of the polysiloxane material in the cured materials.

Examples of such copolymeric contact lens materials employing siloxanyl alkyl esters having acryloxy- or methacryloxy-functional siloxane units are

shown in U.S. Pat. Nos. 3,808,178 (Gaylord, issued April 30, 1974), 4,120,570 (Gaylord, issued October 17, 1978) and 4,152,508 (Ellis et al., issued May 1, 1979). However, these patents teach that while some of the copolymers are inherently wettable by human tear fluid, it may be necessary to improve the wettability of others by including monomers containing hydrophilic radicals such as hydroxyl, carboxyl and glycidyl radicals in the formulation, by surface treating the lens surfaces or by the use of an aqueous wetting solution. However, a surface treatment process has the previously described disadvantage. Aqueous wetting agent solutions may not continue to produce the desired wetting effect for reasonably long periods of time unless the surfaces of the lens itself are sufficiently capable of being inherently wettable by human tears after the initial coating of wetting agent wears off as a result of normal tear flow over the lens. Addition of organic unsaturated monomers with hydrophilic groups appears to be a useful way to obtain inherently wettable hard contact lens material, but the use of such monomers requires the production of copolymers which adds an extra manufacturing step subsequent to the production of the siloxane monomer, can result in loss of clarity due to incompatibility between components, and can also reduce the oxygen permeability of the lens material because the more highly oxygen permeable siloxane monomer is being replaced by the less oxygen permeable organic monomer. See also U.S. Pat. Nos. 4,216,303 (Novicky, issued August 5, 1980) and 4,235,985 (Tanaka et al., issued November 25, 1980).

In an attempt to provide a hard contact lens material which retained the highly desirable degree of oxygen permeability possessed by the Birdsall et al. silicone resin materials, but which was also inherently wettable by human tear fluid, several copolymers composed of the polymerization product of an acrylate-functional polysiloxane composition (for oxygen permeability) and 2-hydroxyethyl methacrylate (for wettability) were evaluated. Various types of acrylate-functional polysiloxane compositions are known as can be seen from an examination of U.S. Pat. Nos. 2,922,806 (Merker, issued January 26, 1960) and 4,035,355 (Baney et al., issued July 12, 1977), U.K. Patent Applications GB 2,023,628 (Berg, published January 3, 1980) and GB 2,040,975 (LeBoeuf, published September 3, 1980), and U.S. Pat. Nos. 2,793,223 (Merker, issued May 21, 1957) and 4,153,641 (Deichert et al., issued May 8, 1979). Siloxane-acrylate copolymers and emulsions thereof which are said to be useful as coating compositions for construction materials are described in Canadian Pat. No. 842,947 (Thomas, issued May 26, 1970). Of these, only two patents mention a contact lens use for the material: the Deichert et al. patent which suggests certain linear polydiorganosiloxanes which contain terminal triorganosiloxane units having one radical which contains an activated unsaturated group such as an acryloxy radical in addition to two other hydrocarbon radicals, all of which radicals are attached to the same silicon atom by means of silicon-carbon bonds and the LeBoeuf patent which teaches acrylate-functional linear polydiorganosiloxanes containing hydrophilic

radicals attached to the silicon atoms which are useful in making soft hydrophilic contact lenses. During the course of this work, it was discovered that a certain category of acrylate-functional polysiloxane compositions could be cured together with aliphatically unsaturated organic compounds to form oxygen-permeable polysiloxane/organic copolymer resins which possessed water-in-air contact angles which were quite similar to those possessed by hard polymethylmethacrylate resins.

The present invention is based upon the discovery that certain types of acrylate-functional polysiloxane compositions can be used to prepare inherently wettable optical devices such as corneal contact lenses without any necessity either for the use of aliphatically unsaturated organic compounds which possess hydrophilic groups or for the use of hydrophilic groups on the acrylate-groups themselves (see, e.g., the poly(alkyleneoxy) radicals in the acrylate-functional siloxane units described in U.S. Pat. No. 4,235,985). Although they are not required, aliphatically unsaturated organic compounds can be used to improve the physical properties of the cured resins employed in producing the devices of the present invention, regardless of whether or not they contain hydrophilic groups, as long as they are biocompatible when cured, sufficiently compatible with the polysiloxane to result in a transparent cured resin and are not used in such amounts that they increase the advancing water-in-air contact angle to a value greater than 80°.

It was discovered that the mole percentage of acryloxy-functional siloxane units present in the

polysiloxane must be at least 30 mole percent of the total moles of siloxane units present to obtain a desirable degree of hydrophilicity for use as an inherently wettable contact lens material, unlike the maximum of 25 mole percent of acrylate-functional siloxane units taught in patents such as U.S. Pat. No. 3,808,178 to Gaylord. Another unexpected result of the Applicant's work was discovered when an attempt was made to increase the oxygen permeability of the cured acrylate-functional polysiloxane material by employing acrylate-functional siloxane units in the composition which further contained one or two alkyl (methyl) groups bonded to the silicon atom by means of carbon-silicon bonds. As will be shown in a later example, the water-in-air contact angle of cured resins obtained from such materials was typically found to be greater than 80° and more often, greater than 90°. Thus, not only was the mole percentage of the acrylate-functional siloxane units present in the polysiloxane composition found to be critical, but the type of acrylate-functional siloxane unit was found to be critical to obtain a polysiloxane resin which is inherently wettable and free of any potentially hydrophilic groups other than the acrylate-functional groups themselves which act as both a cross-linking site and as a means for rendering the cured resin inherently wettable. Insofar as the Applicant is aware, such resins have been specifically identified as having these properties and have not been suggested as being useful to manufacture optical devices such as contact lenses having the following desirable characteristics.

It is one object of this invention to provide a biocompatible hard oxygen-permeable polysiloxane resin optical device, particularly in the form of a corneal contact lens, having an open eye Equivalent Oxygen Performance (EOP) value of at least 3 percent at 0.1 mm thickness at 21°±2°C which is inherently wettable by human tear fluid without any necessity for the further inclusion of a source of hydrophilic groups such as hydroxyl or poly(alkyleneoxy) groups into the formulation. Such optical devices did not require surface treatments such as plasma treatment during their manufacture to render the surfaces thereof wettable by human tear fluid. The elimination of such an extra manufacturing step results in a reduction in manufacturing costs and also enables an eye care practitioner to subsequently alter the surface of the lens without necessitating retreatment of the lens to restore its wettability by human tear fluid.

It is another object of this invention to provide corneal contact lenses which are wettable, but do not absorb a significant amount of water and thereby minimize the opportunity for harmful microorganisms and spores to become incorporated into the lens polymer during wear.

It is a further object of this invention to provide optical devices of the above type which can easily be manufactured using conventional silicone resin technology and commercially available silicone raw materials.

It is still a further object of this invention to provide a hard polysiloxane resin optical device having an EOP value of at least 10 percent of

0.1 mm which is useful as a corneal contact lens that is suitable for continuous wear.

It is also an object of this invention to provide a hard, biocompatible oxygen permeable polysiloxane/organic copolymer resin optical device, particularly in the form of a corneal contact lens, having a calculated open eye EOP value of at least 3 percent at 0.1 mm thickness at 21°±2°C which is inherently wettable by human tear fluid, said resin being a cured copolymer of a specific acrylate-functional polysiloxane composition and at least one aliphatically unsaturated organic compound wherein the latter is employed to increase the physical properties of the copolymeric resin.

This invention relates to an optical device which is a lens to be worn against or inside the eye which is inherently wettable by human tear fluid and possesses an oxygen gas permeability coefficient (DK) value of at least $2 \times 10^{-10}$ $(cm^3 \cdot cm)/(cm^2 \cdot sec \cdot cm\ Hg)$ which results in a calculated open eye Equivalent Oxygen Performance (EOP) of at least 3 percent at 0.1 mm thickness at 21°±2°C, said lens consisting essentially of an optically clear biocompatible cured polysiloxane resin having a flexural strength value of at least 3,500 p.s.i. and a durometer value of at least 60 on the Shore D scale in the unhydrated state at 21°±2°C and having an advancing water-in-air contact angle value of no greater than 80° at 21°±2°C in the unhydrated state, said resin having been prepared by curing an acrylate-functional polysiloxane composition containing at least 30 mole percent of acrylate-functional siloxane units of the unit formula

$H_2C=CRCCOR'SiO_{1.5}$, where said mole percentage is based upon the total moles of siloxane units present in said polysiloxane composition, essentially any remaining siloxane units present in said composition being selected from the group consisting of siloxane units of the unit formula $R''SiO_{1.5}$, $R''SiO$, and $R''_3SiO_{0.5}$, wherein R is a methyl radical or hydrogen, R' is a divalent alkylene radical of from 1 to 4 inclusive carbon atoms and each R" is selected from the group consisting of alkyl radicals of from 1 to 3 inclusive carbon atoms, haloalkyl radicals of from 1 to 3 inclusive carbon atoms, phenyl radicals and hydrogen.

In an alternative embodiment, the present invention provides an optical device which is a lens to be worn against or inside the eye which is inherently wettable by human tear fluid and possesses an oxygen gas permeability coefficient (DK) value of at least $2 \times 10^{-10}$ $(cm^3 \cdot cm)/(cm^2 \cdot sec \cdot cm\ Hg)$ which results in a calculated open eye Equivalent Oxygen Performance of at least 3 percent at 0.1 mm thickness at 21°±2°C, said lens consisting essentially of an optically clear biocompatible cured polysiloxane/organic copolymer resin having a flexural strength value of at least 3,500 p.s.i. and a durometer value of at least 60 on the Shore D scale in the unhydrated state at 21°±2°C and having an advancing water-in-air contact angle value of no greater than 80° at 21°±2°C in the unhydrated state, said resin having been prepared by curing a compatible mixture consisting essentially of (A) an acrylate-functional polysiloxane composition containing at least 30 mole percent of acrylate-functional siloxane units of the unit formula

$H_2C$=CRCOOR'$SiO_{1.5}$, where said mole percentage is based upon the total moles of siloxane units present in said polysiloxane composition, essentially any remaining siloxane units present in said composition being selected from the group consisting of siloxane units of the unit formula R"$SiO_{1.5}$, R"$_2$SiO, R"$_3$$SiO_{0.5}$ and combinations of two or more of such units, wherein R is a methyl radical or hydrogen, R' is a divalent alkylene radical of from 1 to 4 inclusive carbon atoms, and each R" is selected from the group consisting of alkyl radicals of from 1 to 3 inclusive carbon atoms, haloalkyl radicals of from 1 to 3 inclusive carbon atoms, phenyl radicals and hydrogen and (B) up to 60 weight percent, based upon the total weight of the mixture, of at least one aliphatically unsaturated organic compound that is free of silicon atoms and has a molecular weight of less than 200, there being no ≡SiH siloxane units present in said mixture when a compound capable of providing -OH radicals is included in the mixture.

This invention also relates to the above-described curable acrylate-functional polysiloxane compositions themselves and to curable mixtures of the same with the above-described amounts of aliphatically unsaturated organic compounds.

The optical devices included within the scope of the present invention are scleral, corneal and intraocular lenses.

The term "consisting essentially of" means that the device is composed primarily of the hereinafter defined siloxane resins and, optionally, aliphatically unsaturated organic compounds, but may

contain minor amounts of other ingredients such as dyes, stabilizers and other ingredients which do not change the essential character of the device.

The term "essentially any remaining siloxane units" means that in addition to the specifically described siloxane units, the acrylate-functional polysiloxane compositions may also contain small amounts of siloxane units containing other organic radicals or OH radicals which do not materially affect the functioning of the composition to cure to an optically clear hard resin useful in such devices.

The term "optically clear" means that the lens must be sufficiently transmissive of visible light and free of noticeable haze to be acceptable for use as an optical device. For example, materials having a luminous transmittance value of at least 85 percent (CIE Source A) measured using a typical lens thickness of the material according to the procedure set forth in ASTM D 1003-61 would be considered as being optically clear materials.

The term "biocompatible" means that the device must be capable of being used for contact with the human body and that any ingredients used to produce the cured resins must be acceptable for such a use as evidenced by testing in accordance with in vitro and in vivo testing procedures normally used to determine such biocompatibility.

Methods for making acrylate-functional polysiloxane compositions and cured silicone resins derived therefrom, including compositions of the above-described specific types, are known as can be seen from an examination of the following patent

documents which teach various means for preparing acrylate-functional polysiloxane compositions and polysiloxane resins of the type employed in the optical devices of the present invention: U.S. Pat. Nos. 2,922,806 and 4,035,355 and U.K. Patent Application No. 2,023,628.

It was found that the total composition, including any silane or polysiloxane cross-linking agents, must contain at least 30 mole percent of said acrylate-functional siloxane units of the unit formula $H_2C{=}CRCOOR'SiO_{1.5}$ to result in a cured polysiloxane resin which is considered to be hydrophilic and capable of being inherently wettable by human tear fluid. Based on the overall composition, there will generally be an average of more than one such siloxane unit per polysiloxane molecule. Although polysiloxane compositions consisting essentially of 100 mole percent of said acrylate-functional siloxane units can be used to obtain a cured polysiloxane resin which possesses a significant degree of oxygen-permeability, it is preferable to employ polysiloxane compositions possessing from 35 to 60 inclusive mole percent of such acrylate-functional siloxane units. In conjunction with this range of acrylate-functional siloxane units, it is also desirable to employ a cured polysiloxane resin which possesses an advancing water-in-air contact angle of no more than 75° to obtain optimum surface-wettability by human tear fluid.

As can be seen from the above formula, an acrylate-functional siloxane unit is meant to be a siloxane unit bearing an acryloxyalkyl (R is a -H) or a methacryloxyalkyl (R is $-CH_3$) radical. Combinations of

both types of siloxane units can also be present in the polysiloxane compositions of the present invention.

The divalent alkylene radical R' is free of unsaturation and contains 1 to 4 inclusive carbon atoms. Examples of R' include $-CH_2-$, $-CH_2CH_2-$, $-CH_2CH_2CH_2-$, $-CH_2CH(CH_3)-$, $-CH_2CH_2CH_2CH_2-$, $-CH_2CH_2CH(CH_3)-$ and $-CH_2CH(CH_2CH_3)-$. Siloxane units wherein the R' radical is $-CH_2CH_2CH_2-$ are preferred because of their ease of preparation and commercial availability and also because they tend to produce a more hydrolytically stable acrylate-functional siloxane unit than most of the other types of R' radicals described above. Siloxane units wherein R is methyl are preferred because they result in the formation of a harder cured polysiloxane resin.

When less than 100 mole percent of acrylate-functional siloxane units are present in the polysiloxane composition, the remaining siloxane units are selected from the group consisting of $R''SiO_{1.5}$, $R''_2SiO$, $R''_3SiO_{0.5}$ and combinations of two or more of such units. Specific examples of siloxane units which can be employed herein are monophenylsiloxane, phenylmethylsiloxane, diphenylsiloxane, diphenylmethylsiloxane, phenyldimethylsiloxane, monomethylsiloxane, dimethylsiloxane, trimethylsiloxane, $HSiO_{1.5}$, methylhydrogensiloxane, phenylhydrogensiloxane, dimethylhydrogensiloxane, diphenylhydrogensiloxane and phenylmethylhydrogensiloxane.

In lieu of the methyl radical in any of the above units, one can employ for example the alkyl radicals ethyl, propyl or isopropyl and the haloalkyl

radicals chloromethyl, 3-chloropropyl or 3,3,3-trifluoropropyl.

In a less preferred, but useful embodiment, the polysiloxane composition may further contain at least one siloxane unit selected from the group consisting of $QSiO_{1.5}$, $R"QSiO$, $R"_2QSiO_{0.5}$,

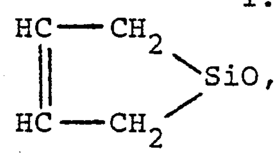 and 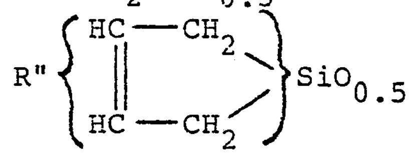

where each Q is a vinyl radical or an allyl radical and R" is as defined above. Examples of such units are methylvinylsiloxane, methylallylsiloxane, methylphenylvinylsiloxane, vinylsiloxane, phenylmethylvinylsiloxane, silacyclopentenylsiloxane, i.e.,

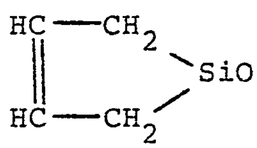

methylsilacyclopentenylsiloxane and combinations of two or more of such units. Preferably no more than 10 mole percent of the total siloxane units present contain such units, and most preferably, no such units are present since the mole percentage of acrylate-functional siloxane units required to be present supplies an ample amount of $>C = C<$ radicals to result in a cured resin.

It should be understood that any of the above siloxane units can be in any of the components of the polysiloxane composition except that it is preferred that the polysiloxanes containing $>C = C<$ radicals be free of ≡SiH units and vice versa. The polysiloxane composition can be a random copolymer, terpolymer or

greater combination of the above siloxane units or it can be what is sometimes referred to as a "block copolymer" composed of "blocks" of siloxane units such as polydimethylsiloxane blocks containing, for example, 2-10 siloxane units per block and $H_2C=CRCOOR'SiO_{1.5}$ units. Preparation of such block copolymers by various methods is known in the art as can be seen from an examination of U.S. Pat. No. 3,878,263 to Martin (issued April 15, 1975) which shows one method for making such block copolymers. A simpler and more conventional manner of preparing such block copolymers is outlined in column 4, line 59 to column 6, line 4 of the Baney et al. patent above. Following the teachings of Baney et al., a mixture of dimethylcyclopolysiloxanes or a mixture of linear hydroxy-endblocked polydimethylsiloxanes having an average of 2 to 10 dimethylsiloxane units per molecule, hexamethyldisiloxane and $CH_2=CCH_3COO(CH_2)_3Si(OCH_3)_3$ in appropriate amounts can be equilibrated in the presence of an acid catalyst to produce a polysiloxane having at least 30 mole percent of $CH_2=CCH_3COO(CH_2)_3SiO_{1.5}$ units and the desired mole percentage of dimethylsiloxy units and trimethylsiloxy units. It is known that polydiorganosiloxane blocks which contain a relatively large number of siloxane units per block tend to render the cured composition softer and more flexible; therefore the compositions selected should be those which cure to a hard polysiloxane resin having the physical properties described herein. Use of large amounts of triorganosiloxy units can also detrimentally affect the physical properties of the cured resin and should be avoided unless an aliphatically unsaturated

organic monomer is to be included in the composition to improve the physical properties of the cured resin. In such a case, it may be desirable to use 45-50 mole percent of triorganosiloxy units to maximize the methyl radical/silicon atom ratio in the polysiloxane and improve the oxygen permeability of the cured resin.

At present, the applicant considers a random polymer manufactured by an equilibration method from acrylate-functional silanes and acrylate-free silanes using well-known techniques such as the hydrolysis and condensation of the appropriate chlorosilanes and alkoxysilanes under acidic conditions followed by the equilibration of the composition formed employing base catalysis to be the simplest and best method of preparing acrylate-functional polysiloxane compositions useful in preparing the devices of the present invention. The following Examples will show the method employed to produce such compositions.

To obtain an optimum level of oxygen permeability, it is preferable to employ a polysiloxane composition which contains one or more siloxane units containing organic radicals such as $R''SiO_{1.5}$, $R''_2SiO$, $R''_3SiO_{0.5}$ and combinations of two or more of such units and more preferably, each R" is a methyl or phenyl radical. To obtain the best level of oxygen permeability, the ratio of methyl radicals to silicon atoms in the cured resin should be at least 0.9/1 or more so that the cured resin has an open eye EOP of at least 10 percent at 0.1 mm thickness.

The polysiloxane compositions employed in this invention can be single or multiple component compositions curable to optically clear resins. In the

single component system, the polysiloxane composition is cured by a free-radical polymerization process which causes curing through the unsaturated acrylate-functional siloxane units. Typical free radical generators useful in such a process are chemical free radical generators such as peroxides e.g., benzoyl peroxide or dicumyl peroxide or organic azo-containing compounds such as asobisisobutyronitrile or sources of ionizing radiation such as electrons, ultraviolet light or gamma rays. If desired, reactive diluents which are sufficiently low in molecular weight at room temperature and which are composed of acrylate-functional siloxane units which may additionally contain siloxane units possessing methyl radicals, phenyl radicals or combinations of both can be added to the polysiloxane compositions to reduce the viscosity of the polysiloxane compositions.

The acrylate-functional polysiloxane compositions can be two component compositions wherein one component is the acrylate-functional polysiloxane to be cured and the other is a cross-linker component containing ≡SiH units. In this system, the preferred catalysts are Group VIII metals such as platinum or palladium. For the purposes of this invention, the metal can be in any desired form such as, for example, the finely divided metal per se or organic, inorganic or organosilicon compounds of the metals. Examples of various types of a preferred metal catalyst, platinum, can be found in U.S. Pat. Nos. 3,419,593 (Willing, issued December 31, 1968) and 3,631,220 (Wojdac, issued December 28, 1971) which teach examples of useful catalysts and the amounts to be used.

The metal or metal compound catalyzes the addition of the silicon-hydrogen bond found in the cross-linker across the olefin group present in an acrylate or methacrylate radical present in the acrylate-functional polysiloxane to be cured. Examples of cross-linkers containing an average of at least two ≡SiH units per molecule are found in U.S. Pat. No. 3,697,473 (Polmanteer et al., issued October 10, 1973) which is inherently wettable by human tear fluid. The physical properties of the cured resin will be affected by various factors such as the mole percentage of acrylate-functional siloxane units, the amount and types (difunctional, trifunctional, polyfunctional) of crosslinkers if any are used, and the types and mole percentages of siloxane units which are not acrylate-functional. High mole percentages (greater than 60 mole percent) of acrylate-functional siloxane units in single component compositions cured by free radical polymerization will generally produce very hard and somewhat brittle cured resins. A cured resin having a measurable flexural strength which is less than 3,500 p.s.i. is generally considered to be rather weak and that flexural strength is the lower limit for use as a hard eye contact lens. Cured resins having a flexural strength greater than 5000 p.s.i. and a durometer value of at least 60, and preferably more than 70, on the Shore D scale in the unhydrated state at 21°±2°C have sufficient strength and toughness to be lathe-machined into eye contact lenses. Acrylate-functional polysiloxane compositions having a flexural strength greater than 3,500 p.s.i. can be molded into the lens shape desired. The Shore D

durometer of at least 60 in the unhydrated state is specified in addition to the flexural strength to identify a "hard resin" versus a flexible elastomeric cured polysiloxane. Flexible materials generally possess a flexural strength which is not measurable because the sample is too weak to resist the force being applied by the test instrument. Generally, the calculated ratio of total organic radicals, excluding any acrylate-functional radicals, to total silicon atoms present in the acrylate-functional polysiloxane composition (i.e., the degree of substitution or D.S) should fall within the range of 0 to 1.7 with a preferred range being between 1.3 to 1.6 inclusive. By employing formulation techniques generally familiar to those skilled in the formulation of silicone resins containing unsaturated groups, one can select an appropriate combination of siloxane units to produce an acrylate-functional polysiloxane composition which is curable to a resin useful in preparing the optical devices of the present invention. As will be shown in the following examples, the water absorption of the cured polysiloxane resins is generally less than 1% and typically close to 0%.

When a two or more component polysiloxane composition is used or if a reactive diluent is added to a one or more component composition, it is important that all components (including free radical polymerization catalysts, inhibitors, radiation sensitizer or inhibitor compounds, etc.) be compatible. Otherwise, the resulting cured resin will be cloudy, non-uniform and unfit for use as an optical device.

Single component acrylate-functional compositions which are cured by means of a free radical polymerization process are preferred for the following reason. The use of a multiple component addition-type curing process which employs cross-linking agents which are polysiloxanes containing ≡SiH units such as $C_6H_5Si[OSi(CH_3)_2H]_3$ generally requires the use of an acrylate-functional polysiloxane having at least 50 mole percent of acrylate-functional siloxane units in order for the cured polysiloxane resin to possess at least 30 mole percent of acrylate-functional siloxane units. Due to the addition of the cross-linking agent (which does not contain acrylate-functional siloxane units), the formulator does not have as wide of a range of amounts of siloxane units from which to choose and to thereby modify the physical properties of the cured resins.

To prepare lenses, the acrylate-functional polysiloxane composition is mixed with a catalyst such as a chemical free radical generator or the several components of the composition are thoroughly mixed together and then catalyzed if a catalyst such as a platinum metal compound has not already been included in one of the components of the polysiloxane composition. If the polysiloxane composition is heat curable, the catalyzed composition is cast into a cylindrical form and then cured at temperatures ranging from 40°C to 200°C, preferably from 40°C to 100°C, to avoid loss of volatile components, for times ranging between 5 and 500 hours, preferably between 5 and 48 hours so that the curing is accomplished in a reasonably short period of time to suit the time

constraints placed on commercial processes. It is preferable to cure and then post cure the polysiloxane composition, e.g., the polysiloxane composition is first cured at a temperature of 50°C for 16 hours and then at 100°C for 8 hours in the mold and thereafter cured at 100°C for 24 hours out of the mold. The first curing process is done at a lower temperature to reduce potential loss of volatile unreacted polysiloxanes and the post cure at a higher temperature insures that the polysiloxane composition is cured and also has the effect of reducing stresses in the cured resin resulting from the cure stage and can improve the optical clarity and stabilize the physical properties of the cured resin. To improve the release of the cured cylinder of resin from the mold, it can be preferable to treat the mold surfaces with a conventional silicone mold release agent (e.g., DOW CORNING® 20 Compound, a product of Dow Corning Corporation) prior to use. The cured cylinders are then formed into buttons approximately 0.5 inch (12.7 mm) in diameter and 0.187 inch (4.7 mm) in thickness when the cured resin is to be fabricated into lenses by conventional lathing or grinding techniques of the type which are presently employed with hard lens materials. The lenses are then polished and an appropriate edge contour is placed on the lens using conventional techniques. Alternatively, the catalyzed polysiloxane composition is placed in a lens mold which is then closed and the polysiloxane composition can then be cured by heating.

If a radiation source such as ultraviolet light is employed to cure an acrylate-functional polysiloxane composition, the polysiloxane composition

(optionally containing a radiation sensitizer compound) is exposed to the radiation source in a mold designed to produce a cylinder, button or a single lens wherein the mold has one or more sides which are transparent to the radiation source being employed. A heat-curable polysiloxane composition is presently preferred because it is similar to the conventional resin curing processes and does not require a large amount of exotic equipment, but a radiation polymerization process is known to possess the advantage of being a rapid cure system which may be more desirable during commercial manufacture of the lenses of the present invention.

Thus, when a cured polysiloxane resin is to be employed in manufacturing a device of the present invention, particularly for use as a corneal contact lens, it is preferred that the mole percentage of acrylate-functional siloxane units present in the total polysiloxane composition fall within the range of 35 to 60 inclusive mole percent, the acrylate-functional siloxane units should have the formula $H_2C{=}C(CH_3)COO(CH_2)_3SiO_{1.5}$, the remainder of the polysiloxane composition be composed of siloxane units of the formula $R"SiO_{1.5}$, $R"_2SiO$, $R"SiO_{0.5}$ and combinations of two or more such units where each R" is a methyl or a phenyl radical and the methyl radical to silicon atom ratio is 0.9/1 or greater, so that the cured polysiloxane resin has an open eye EOP of at least 10 percent at 0.1 mm thickness. The acrylate-functional polysiloxane composition is preferably heat cured by a chemical free radical polymerization process employing a peroxide such as benzoyl peroxide or dicumyl peroxide. One example of a

formulation which would be expected to meet the above criteria would be an acrylate-functional polysiloxane composition containing 35 mole percent of $H_2C{=}C(CH_3)COO(CH_2)_3SiO_{1.5}$ units, 45 mole percent of $(CH_3)_2SiO$ units and 20 mole percent of siloxane units selected from those having the unit formula $R''SiO_{0.5}$, $R''_2SiO$, $R''_3SiO_{0.5}$ or combinations of both where each R" is a methyl radical or a phenyl radical such as $(CH_3)_3SiO_{0.5}$ units or $(C_6H_5)_2SiO$ units. Another example of a preferred formulation is found in Example 3. More preferred cured polysiloxane resins are those which possess an advancing water-in-air contact angle of no more than 75°. Use of larger mole percentages of acrylate-functional siloxane units generally results in a lower water contact angle.

The novel cured polysiloxane resin lenses of the present invention possess high oxygen permeability coupled with an inherently wettable surface which makes them very attractive for use as corneal contact lenses. It was found that the flexural strength can be increased and the generally observed 1:1 ratio between the tangent modulus and the secant modulus can be changed to increase the value of the tangent modulus relative to the secant modulus by copolymerizing up to 30 weight percent of one or more aliphatically unsaturated organic compounds which are free of any silicon atoms and have a molecular weight of less than 200 with the previously described acrylate-functional polysiloxane compositions to produce a cured polysiloxane/organic copolymer resin useful in producing devices of the present invention. Inclusion

of such aliphatically unsaturated organic compounds results in an improvement in the aforementioned physical properties to produce a lens which is more resistant to breakage by flexing, but does have the disadvantage of reducing the oxygen permeability of the device when compared with the oxygen permeability of the cured polysiloxane resin itself.

Since the acrylate-functional polysiloxane compositions which are useful in the devices of the present invention are hydrophilic and inherently wettable by human tears, the addition of one or more esters of methacrylic or acrylic acid such as 2-hydroxyethyl methacrylate or methyl methacrylate does not detract from the wettability of the lens provided that a homopolymer of the cured ester of methacrylic or acrylic acid itself does not itself possess an advancing water-in-air contact angle greater than 80°. Small amounts of other biocompatible and optically compatible aliphatically unsaturated organic compounds which cure to homopolymers having advancing water-in-air contact angles greater than 80° can be used alone or in combination with the aforementioned esters provided that the advancing water-in-air contact angle of the cured polysiloxane/organic copolymer resin is not greater than 80° and provided that the cured resin is inherently wettable by human tear fluid.

The preferred aliphatically unsaturated organic compounds are those which are free of silicon atoms, have a molecular weight of less than 200 and are selected from acrylate-functional organic compounds having the formula $H_2C=C(Z)COOR'''X$ where R"' is $-(C_nH_{2n})-$ or $-(C_nH_{2n}O)_mC_nH_{2n}-$ where n has a value of

from 1 to 6 inclusive and preferably 2 or 3, m has a value of from 1 to 5 inclusive and preferably 2 or 3, X is -H, -OH or $-OOC(R)C{=}CH_2$, and Z is hydrogen or a methyl radical. Examples of such compounds are methyl methacrylate, methyl acrylate, ethyl acrylate, butyl methacrylate, cyclohexyl methacrylate, allyl methacrylate, benzyl methacrylate, 2-hydroxyethyl methacrylate, 2-hydroxyethyl acrylate, 2- or 3-hydroxypropyl methacrylate, ethylene glycol dimethacrylate and triethylene glycol dimethacrylate. The preferred aliphatically unsaturated organic compounds are those of the formula $H_2C{=}C(Z)COOR'''X$ where R"' is $-(C_nH_{2n})-$, Z is a methyl radical, X is -H or $-OOC(CH_3)C{=}CH_2$ and n is 1, 2 or 3 and more preferably, methyl methacrylate or 2-hydroxyethyl methacrylate is the acrylate-functional organic compound employed to produce polysiloxane/organic copolymer resins.

Examples of other aliphatically unsaturated organic compounds which are free of silicon atoms and possess a molecular weight of less than 200 can be those compounds which are known to be useful in the preparation of corneal contact lenses such as those described in U.S. Pat. No. 4,153,641 to Deichert et al. which teaches other examples of such compounds. For example, some of these known compounds are N-vinyl pyrrolidone, styrene and itaconate esters.

The mixture of the previously-described acrylate-functional polysiloxane composition and one or more of the above-described aliphatically unsaturated organic compounds must of course be compatible and capable of being cured to form an optically clear resin

to be useful as a lens. While organic radicals containing hydrophilic radicals such as a hydroxyl radical in addition to the ester groups present in the acrylate-functional portion of the compound can be used to improve the properties of the cured polysiloxane resins, compounds which do not possess such additional hydrophilic radicals can be used. To preserve as much oxygen permeability as possible, no more than 60 weight percent of the mixture to be cured should be the aliphatically unsaturated organic compounds and more preferably, only up to 30 weight percent, inclusive, of such compounds are used so that the physical properties of the cured resin are improved while minimizing the loss in oxygen permeability due to the presence of the organic component. As will be noted below and shown in the Examples, the oxygen permeability of the cured polysiloxane/acrylate copolymer resin depends upon the methyl radical silicon atom ratio of the polysiloxane composition. When polysiloxane compositions employing methyl radical silicon atom ratios of less than 0.9 or levels of acrylate-functional siloxane units higher than 35 mole percent are employed, it may then be desirable to use no more than 30 weight percent, and preferably less than 10 weight percent, of organic compound based upon the total weight of the mixture to be cured (see Table VII of Example 8). Runs 14 and 15 of Example 8 containing 25 weight percent methyl methacrylate gave a desirable balance of oxygen permeability and physical properties and also possessed an advancing water-in-air contact angle of less than 80° thereby making it reasonable to expect that those resins would be inherently wettable when placed in the

eye. Acrylate-functional organic compounds which are free of any additional hydrophilic radicals besides the ester group such as methyl methacrylate are most preferred because use of such compounds minimizes the tendency for the cured polysiloxane/organic copolymer resin to absorb water and thus avoids the problems associated with pathological organisms being absorbed into the cured resin.

To obtain optimum oxygen permeability, the acrylate-functional polysiloxane composition should be one wherein R is a methyl radical, R' is $-CH_2CH_2CH_2-$, each R" is a methyl radical or phenyl radical and the methyl radical to silicon atom ratio is at least 0.9/1. It is preferable to include as much methyl radical content as possible in the polysiloxane composition to obtain optimum oxygen permeability.

The acrylate-functional polysiloxane composition is mixed together with the desired amount of aliphatically unsaturated organic compound and cured. While the mixture can be cured in the manner described above for the two component compositions which cure by the metal catalyzed addition of $\equiv$SiH to $>C=C<$ radicals using the aforementioned cross-linkers, the best method to cure such mixtures is through a free radical polymerization process, preferably using a chemical free radical source such as a peroxide and thereafter heat curing the mixture in a mold as was previously described for the acrylate-functional polysiloxane compositions. However, the metal catalyzed addition procedure cannot be used when organic aliphatically unsaturated organic compounds capable of providing -OH radicals are present

in the mixture employed because the ≡SiH also reacts with -OH to form hydrogen gas which can cause bubbles and destroy the optical clarity of the cured resin. The cured polysiloxane/organic copolymer resin can then be used in the manufacture of lenses of the present invention in the same manner as is described herein for the cured polysiloxane resins.

Like conventional polymethylmethacrylate hard contact lenses, it is not preferable to place a dry eye contact lens of the present invention on the cornea of a wearer. Hard polymethylmethacrylate contact lenses are generally provided to an eye care practitioner in a sealed package and it is a recommended practice to store the lenses in a hard contact lens soaking solution (generally a sterile isotonic aqueous saline solution having a pH of 7.4 which may further contain disinfectants to sterilize the lens surfaces) when the lenses are not being used. Dry or improperly soaked lenses tend to be less wettable than hydrated lenses which have been soaked, stored or immersed in aqueous solution and tend to irritate the wearer's eye until they become "wetted". A hard contact lens wetting agent solution is also often placed on the lens just prior to placement on the cornea to initially render the lens more comfortable to wear. The wetting solution is removed from the surface of the contact lens in a short while by the normal flow of tears above and below the lens, yet the polymethylmethacrylate lens can be worn by many wearers for periods of up to 8 hours without losing its hydrated, wettable state.

Based upon the inventor's observations, contact lenses of the present invention appear to require essentially the same type of handling described above that polymethylmethacrylate lenses require before placement on the eye. The best and simplest way to prepare the lenses of the present invention for initial wear is to store the lenses in sterile isotonic aqueous saline solution or in an aqueous contact lens soaking solution after they have been heated to 80°C in a heat disinfector until they are sterile (about 30 minutes). Since governmental regulations require that eye contact lenses be provided in a sterile form by the manufacturers, the lenses of the present invention can be supplied in a sterile isotonic saline solution and by storing the lenses in an aqueous contact lens soaking solution, the lenses are expected to remain wettable and comfortable to wear. It is of course recognized that other factors may cause a lens of the present invention to lose its inherent wettability. For example, any wettable lens may gradually lose its wettability due to the formation of protein and/or lipid deposits on the lens surfaces during wear and these deposits must be removed from time to time such as through the use of conventional hard contact lens cleaning solutions. One advantage which lenses of the present invention have over hydrophobic lens materials which are surface treated to render the surfaces wettable is that the former can be vigorously cleaned and even repolished to remove such deposits since there is no danger that the cleaning or polishing operations will expose a hydrophobic portion of the lens and

thereby necessitate a subsequent treatment of the lens surface to render the surface completely wettable.

One of the advantages of the lenses of this invention is their relatively high degree of oxygen permeability. Percent Equivalent Oxygen Performance (EOP) in the open eye is a very good way of determining the actual performance of a contact lens material and this method is described by R. M. Hill et al., International Contact Lens Clinic, pages 27-29, Winter, 1975. Briefly, this method involves measuring the uptake of oxygen by the cornea from a limited reservoir after a contact lens has been worn and comparing this profile with the standard profile that has been generated by first bathing the cornea with a gas mixture containing a known partial pressure of oxygen. The percent EOP is the percent of oxygen in the latter gas mixture. In short, this is a measure of how much oxygen the cornea needs against how much the lens will give it.

The determination of percent equivalent oxygen performance by the Hill et al. method is slow and may produce variable results, so a faster instrumental method has been devised. The following method for calculating EOP is the best way to obtain reasonably accurate comparisions of the EOP of resin materials and is the method to be used in determining the EOP values of the resins used in the devices of the present invention. It involves calculating the open eye percent EOP by measuring the oxygen transmissibility of the lens material using the oxygen flux meter S/V 920a manufactured by Schema Versatae Corporation to obtain the oxygen gas permeability coefficient (DK

value) of the lens material from which the flux can be calculated according to the equation:

$$F_1 = \left(\frac{DK}{L}\right) \times \left(\Delta P\right)$$

where $F_1$ is the flux through the lens in

$$\frac{\mu l(O_2)}{cm^2/hr.},$$

the gas permeability coefficient of a given material is equal to the product of the diffusion coefficient (D) and the solubility coefficient (K) of the gas (in this case oxygen) in the subject material (simply referred to as "DK") and DK is expressed in the following units

$$\frac{cm^3 \cdot cm}{cm^2 \cdot sec \cdot cm\ Hg},$$

L is the thickness of the material in centimeters (cm) and P is the pressure drop of oxygen across the material. The oxygen flux of the cornea is derived by the equation $F_c = \alpha P^{\beta}$ where $F_c$ is the oxygen flux into the cornea, P is the partial pressure of oxygen at the face of the cornea, $\alpha = 0.026789$ and $\beta = 1.0298$. The DK value can also be obtained using the oxygen gas permeability coefficient value obtained using the "Dow Cell" method described in ASTM D1434-75.

In order to calculate the EOP one equates

$$\left(\frac{DK}{L}\right)\left(\Delta P\right) = \alpha P^{\beta}$$

and incrementally solves the equation for $P_{O_2}$ by plotting $F_1$ on the scale log of oxygen flux against the log of P and by plotting $F_c$ on the scale log oxygen flux against log P. The two plots are then overlayed and

$P_{O_2}$ is indicated by the point of intersection of the two curves. This value is then inserted in the equation

$$EOP = \left(P_{O_2}\right) x \left(\frac{21}{155}\right)$$

to calculate the percent EOP.

This method has shown excellent agreement as between calculated and observed EOP values. For example, for silicone rubber lens material, the calculated value of EOP is 19.4 percent and the value observed by the Hill et al. method is 19.2 percent. For cellulose acetate butyrate lens material, the calculated value is 3.0 percent and the observed value is 2.4 percent and for polymethylmethacrylate lenses the observed value is less than 1 percent and the calculated value is less than 1 percent. It is considered that an EOP of 10 percent or above gives best results with respect to wearer comfort. The higher the EOP, the better. An EOP value of 3% at 0.1 mm thickness at 21°±2°C is equivalent to an oyxgen gas permeability coefficient (DK) value of
$2 \times 10^{-10} (cm^3 \cdot cm)/(cm^2 \cdot sec \cdot cm\ Hg)$ or when the units of pressure are millimeters of Mercury:
$2 \times 10^{-11} (cm^3 \cdot cm)/(cm^2 \cdot sec \cdot mm\ Hg)$.

For the purpose of this invention, the DK of the resins used herein was measured polarographically using the above oxygen flux meter according to the instructions of the manufacturer. This involves positioning the lens in the apparatus and immersing it in an isotonic solution of sodium chloride, buffered at a pH of 7 to 9. Air is then bubbled through the solution on top of the lens so that the oxygen diffuses through the solution and the lens to the platinum

electrode. Each run was made until equilibrium was established as shown by the instrument reading and the DK was calculated by the equation DK = L x 1.84 x $10^{-8}$ (meter reading)/$P_{O_2}$ where $P_{O_2}$ is the partial pressure of oxygen in air and L is the thickness of the material.

The flexural strengths, tangent modulus and secant modulus of the cured resins were determined on a table model Instron Universal Testing Instrument having a 2 inch (5.08 cm) span flex test fixture using a chart speed of 2 inches (5.08 cm) per minute and a crossarm speed of 0.2 inches (0.51 cm) per minute. A cylindrical rod of each cured resin that was 10 millimeters (mm) in diameter and 75 mm in length was used in making the above strength and modulus measurements.

The hardness of the cured resin was measured on a ½ inch (1.27 cm) thick disk having a diameter of ½ inch (1.27 cm) using a Shore D maximum reading quadrant style Durometer at 21°±2°C. Measurements were taken on both sides of the disk and averaged.

The advancing water-in-air contact angles were measured using a sessile drop method at 21°±2°C on dry (unhydrated) samples of the cured resins using distilled water. The instrument used was a NRL Contact Angle Goniometer, Model No. A-100 which is a product of Rame-Hart, Inc., Mountain Lake, NJ.

In the following examples the following abbreviations are used: Ph for phenyl, Vi for vinyl, Me for methyl, Bu for butyl, Pr for propyl and $F_3Pr$ for 3,3,3-trifluoropropyl. All percent EOP are for 0.1 mm thickness at 21°±2°C except where otherwise specified. All parts reported in the following examples are parts

by weight and all percentages reported with reference to siloxane units are mole percent unless otherwise specified.

In addition to being useful as lenses for contact with the eye, resins obtained by curing the above-described compositions or mixtures can also find use as lenses for eyeglasses or in applications where gas permeable, hard material is needed.

The following examples are illustrative only and should not be construed as limiting the invention which is properly delineated in the appended claims.

Examples 1-2

These examples illustrate the preparation of acrylate-functional polysiloxanes curable to optically clear polysiloxane resins useful in preparing lenses of the present invention.

Example 1 illustrates the preparation of a methacrylate-functional polysiloxane composition. 1155 grams (g) of distilled water were measured into a 3-necked, 3 liter round bottom boiling flask having a bottom drain. The boiling flask was fitted with a 2-liter addition funnel, thermometer, a water-cooled reflux condenser and an air motor-powered stirring rod having a TEFLON® stirring paddle (TEFLON® is a registered trademark of the E.I. DuPont de Nemours Company). 372.50 g of gamma-methacryloxypropyltrimethoxysilane, 193.62 g of dimethyldichlorosilane and 570 g of reagent grade toluene were combined in the addition funnel. The stirrer and condenser cooling water were started and the mixture in the addition funnel--about 1000 milliliters (ml)--was added to the water in the flask below over a period of about five

minutes. The temperature in the flask and the volume of the mixture being added as a function of time were recorded as follows:

| Time (min.) | Start | 1 | 2 | 3 | 4 | 5 |
|---|---|---|---|---|---|---|
| Temp. (°C) | 22 | 31 | 41 | 46 | 48 | 49 |
| Volume Added (ml) | 0 | 200 | 400 | 650 | 800 | 1000 |

After the addition was completed, the resulting mixture was stirred for one-half hour, the stirring was stopped and the organic toluene and acidic aqueous phases were allowed to separate. After the phases were well separated, the lower acidic aqueous layer was drained off and discarded. About 1000 ml of hot (80°C) distilled water was added, with stirring, to the flask containing the toluene phase. After the addition was completed, stirring was stopped and the two phases were again allowed to separate and the aqueous phase was drained off. This washing process was repeated at least three times until the pH of the separated aqueous phase was about the same as that of the distilled water. The toluene phase containing the methacrylate-functional polysiloxane was then transferred to a 3-necked, 3 liter round bottom flask and weighed. The weight of the material was found to be 950.35 g and the expected weight was 949.99 g.

The flask containing the toluene phase was fitted with a thermometer, an air motor-powered stirrer with a TEFLON® stirring paddle, a Dean-Stark trap fitted with a water-cooled reflux condenser and a heating mantle. Three grams of an aqueous solution containing 10 weight percent of potassium hydroxide was added to the toluene phase with stirring and the mixture was heated to 110°C. Nineteen grams of water was removed

from the mixture by means of the Dean-Stark trap and the contents of the flask were refluxed at 110°C for an additional two hours. The contents of the flask were then cooled to room temperature, 0.61 g of trimethylchlorosilane was added, with stirring, to the contents of the flask followed by about a quarter cup of acid-washed CELITE® diatomaceous earth (a filtering aid which is a product of Johns-Manville Products Corp.). The contents of the flask were then filtered through a 10-15 micron sintered glass filter funnel. The filtered material was then transferred to a 3-necked, 3 liter flask fitted with thermometer, air motor-powered stirrer having TEFLON® stirring paddle, a water-cooled stirrer bearing, a water-cooled condenser with a vacuum adaptor and a 1 liter collection flask to recover the toluene. The apparatus was connected to a vacuum source, a heating mantle was placed beneath the 3 liter flask and dry ice/acetone bath was placed over the collection flask. The vacuum source was opened and after the boiling mass in the 3 liter flask was under control, the flask was slowly heated to 95°C over an hour period. Upon reaching 95°C, the heat source was removed and the amount of methacrylate-functional polysiloxane remaining in the 3 liter flask represented a yield of 97.4%. The polysiloxane was a random copolymer having a composition of 50 mole percent $H_2C{=}CCH_3COO(CH_2)_3SiO_{1.5}$ units and 50 mole percent of $Me_2SiO$ units with a very small amount of $Me_3SiO_{0.5}$ units.

Example 2 illustrates the preparation of an acrylate-functional polysiloxane using a procedure similar to that used in Example 1. The same apparatus

that was used in Example 1 was used in this Example. Thus 1000 g of distilled water was charged to the 3 liter flask and a mixture consisting of 259 g of $H_2C{=}CHCOO(CH_2)_3SiCl_3$ (1.05 moles), 95 g of phenyltrichlorosilane (0.45 moles), 152 g of diphenyldichlorosilane (0.6 moles), 98 g of trimethylchlorosilane (0.9 moles) and 645 g of reagent grade toluene was placed in the addition funnel. The contents of the addition funnel were added to the water in the flask with stirring over a five minute period of time, the contents were allowed to stir for an additional one-half hour and then the stirring was stopped to allow the phases to separate. After repeatedly washing the organic phase until the pH of the washwater was the same as that of the distilled water, the weight of the organic phase in the flask was 1060 g while 1057 g was the expected weight.

The organic (toluene) phase was transferred to another flask as in Example 1, three grams of potassium hydroxide solution was added and while the contents were being heated to 110°C, fifteen grams of water was removed. The contents were refluxed for an additional two hours, cooled to room temperature and 0.61 g of trimethylchlorosilane followed by the filtering aid was added to the contents of the flask. The contents were then filtered and the toluene was removed under vacuum up to a maximum temperature of 95°C to obtain a final yeld of 98% of an acrylate-functional polysiloxane having the following average composition: 35 mole percent of $H_2C{=}CHCOO(CH_2)_3SiO_{1.5}$ units, 15 mole percent of $PhSiO_{1.5}$ units, 20 mole percent of $Ph_2SiO$ units and 30

mole percent of $Me_3SiO_{0.5}$ units. That polysiloxane had a calculated methyl radical/silicon atom ratio of 0.9/1.0 and a calculated D.S. of 1.45.

Example 3

A methacrylate-functional polysiloxane was made using the general procedure of Example 1 which was a random polymer having the following composition: 35 mole percent of $H_2C{=}CCH_3COO(CH_2)_3SiO_{1.5}$ units, 15 mole percent of $PhSiO_{1.5}$ units, 20 mole percent of $Ph_2SiO$ units and 30 mole percent of $Me_3SiO_{0.5}$ units. This methacrylate-functional polysiloxane was mixed with one percent by weight of benzoyl peroxide and the mixture was then cast into rods one half inch (1.27 mm) in diameter and cured according to the following procedure: 16 hours at 50°C in the mold, then 7±1 hour at 100°C followed by 24 hours at 100°C out of the mold. The cured resin had the following properties: advancing water-in-air contact angle of 78°, a calculated methyl radical to silicon atom ratio of 0.9/1, a calculated D.S. of 1.45, percent EOP of 10 at 35°C, flexural strength of 5,885 p.s.i., tangent modulus of 180,000 p.s.i., secant modulus of 180,000 p.s.i. and Shore D durometer value of 85.

The cured resin was fabricated into contact lenses of the correct individual prescription for seven volunteer patients using conventional lathe cutting and polishing techniques of the type normally employed with hard contact lenses such as those made from polymethylmethacrylate.

In fitting the first patients, an attempt was made to observe the wettability of the lens in the eye by cleaning a dry lens with a conventional sterile

aqueous soft contact lens cleaning solution (SOFT MATE® Cleaning Solution, a product of Barnes-Hind Pharmaceuticals, Inc.) and rinsing the lens thoroughly with a conventional sterile preserved isotonic saline solution for contact lenses (SOFT THERM™ Solution, a product of Barnes-Hind Pharmaceuticals, Inc.) prior to applying it to the patient's cornea. The lens did not appear to have a wettable surface when placed on the cornea. The lens was then cleaned with a conventional sterile aqueous hard contact lens cleaning solution (LC-65® Solution, a produce of Allergan Pharmaceuticals) followed by the application of a conventional sterile aqueous hard contact lens wetting solution (LIQUIFILM® Wetting Solution, a product of Allergan Pharmaceuticals), but still was not considered to have a wettable surface when placed on the cornea. Other conventional hard contact lens wetting solutions (ADAPETTES™ Solution, a product of the Burton, Parsons and Company, Inc. and CLERZ® , a product of Smith, Miller and Patch, division of Cooper Vision, P.R., Inc. were tried and again the lenses were not considered to be wettable. The lenses were rinsed and placed in a conventional contact lens thermal disinfection unit containing a conventional sterile preserved isotonic saline solution for contact lenses (SOFT THERM™ Solution). The immersed lenses were heated to 80°C for 20 minutes, cooled to room temperature and rinsed,and were observed to be inherently wettable by human tear fluid when placed on the patient's eye. Thereafter, all dry lenses were placed in a thermal disinfection unit as above and heated in solution to 80°C for one cycle (20-30 minutes) prior to being

placed on a patient's eyes. Thereafter, conventional contact lens cleaning, soaking and disinfection (thermal and chemical disinfection regimens were both tried with satisfactory results) methods were used by the patients. The lenses were stored in solution and were not allowed to dry out after the initial thermal disinfection unit treatment. The seven patients wore a total of twelve lenses for varying periods of time: 5 patients wore the lenses for periods of 3.5 hours, 7 days, 7 days, 17 days and 22 days while two other patients wore the lenses for periods in excess of 25 days and 42 days respectively. Three of the patients who wore the lenses more than one day used a thermal disinfection regimen and the other patients used chemical disinfection regimens.

All lenses were considered to be "inherently wettable" after the dry lenses were subjected to the original thermal disinfection treatment in solution and at all subsequent examinations except for three lenses from two patients which developed non-wetting areas and buildup of lens deposits on the lens surfaces after 20 and 22 days respectively. These patients were employing chemical rather than thermal disinfection regimens. All three were subjected to the above thermal disinfection treatment in solution as above. After the treatment, two of the lenses from the same patient became wettable and wear of those lenses was continued for a total of more than 42 days while the other lens became non-wetting over its entire surface and was no longer used. These were the only patients who reported irritation and/or vision clarity problems due to poor lens wetting. No other subjective

irritation was reported from this group. There was no observed need to use conventional contact lens wetting solutions throughout the day to maintain the wettability of the lens on the eye. Thus, the inherently wettable lenses of the present invention were capable of being worn comfortably without any need for any surface treatments.

A further advantage of these lenses was demonstrated by the fact that three lenses were modified to thin their edges. Two of the lenses were considered to be wettable on the eye after modification and one simply needed to be placed in a thermal disinfection unit as above to renew the surface wettability. Three of the above lenses were broken during handling.

To discover whether or not heating in solution was the only manner in which a dry lens of the present invention could be rendered wettable by human tear fluid, a dry contact lens of the above resin was immersed in a conventional hard contact lens cleaning and soaking solution (CLEAN-N-SOAK® Solution, a product of Allergan Pharmaceuticals) for 30 hours at room temperature. After soaking, it was rinsed with tap water and wetted with a conventional hard contact lens wetting solution (LIQUIFILM® Solution) and placed on the cornea of a volunteer patient. In contrast with the earlier results reported above, this lens was observed to hold a continuous tear film with a front surface evaporation time (T.F.B.U.T.) greater than 10 seconds and was considered to be inherently wettable by human tear fluid. Subsequently, two more lenses of the same type were soaked as above for 21 hours and

tested under the same conditions with the same results. Thus,to obtain the best results, the lenses of the present invention should be allowed to equilibrate in an aqueous solution, with or without heating, prior to initial use and stored in an aqueous solution to avoid having the lenses dry out during the time that they are not being worn.

Example 4

The following examples show the change in EOP value at 21°±2°C as a result of modifying the methyl radical to silicon atom ratio of resins useful in the lenses of the present invention. The following acrylate-functional polysiloxanes were prepared having the composition shown in Table I. Each acrylate-functional polysiloxane was formulated into an one-component peroxide catalyzed composition as described in Example 3 and also cured and post cured in the same manner as in Example 3 to obtain an optically clear cured polysiloxane resin. The physical properties of the cured polysiloxane resins are listed in Table II. Formulations A and B employed the same acrylate-functional polysiloxane composition, but were cured at different times. Formulation D is a comparative example since the mole percentage of $H_2C=CCH_3COO(CH_2)_3SiO_{1.5}$ units is less than 30 mole % and the water-in-air contact angle was greater than 80°C. The acrylate-functional siloxane units employed in these polysiloxane compositions contained the gamma-methacryloxypropyl radical and are hereinafter referred to as $MAPSiO_{1.5}$ units in the following tables and Examples. As expected, the EOP value was found to increase as the calculated methyl radical to silicon

atom ratio was increased from 0 to 1.5/1. The properties of the optically clear cured polysiloxane resins obtained from Formulations A, B and C suggest that each appears to be suitable for the production of oxygen permeable contact lenses after it has been determined that the cured resin is wettable by human tear fluid.

Example 5

This example shows the effect of varying the ratios of the various types of siloxane units present in acrylate-functional polysiloxane compositions on the physical properties and water-in-air contact angles of cured polysiloxane resins obtained therefrom. Acrylate-functional polysiloxane compositions were prepared having the composition shown in Table III. The procedure employed in Example 3 was also followed in catalyzing, curing and post curing the compositions of Table III and the physical properties of the resulting polysiloxane resins are tabulated in Table IV. Based upon the Me/Si ratio of each formulation, it is believed that when the EOP at 21°±2°C at 0.1 mm thickness is measured, all of the resins listed in Table IV would have an open eye EOP of at least 3%. The polysiloxane composition of Example 2 was also cured and post cured as above and the cured resin had the following properties: water-in-air contact angle - 78°, durometer (Shore D) - 89, flexural strength - 3650 p.s.i., tangent modulus - 180,000 p.s.i. and secant modulus - 180,000 p.s.i. The properties of each optically clear resin show it to be suitable for use in producing an oxygen permeable, silicone resin contact lens which is inherently wettable by human tear fluid.

Example 6

This comparative example demonstrates the effect on water-in-air contact angle value of the cured resin resulting from a) the use of less than 30 mole percent of $MAPSiO_{1.5}$ units in acrylate-functional polysiloxane compositions (formulations A-C) and b) the use of acrylate-functional siloxane units such as MAP(Me)SiO units and $MAP(Me)_2SiO_{0.5}$ units in acrylate-functional polysiloxane compositions (formulations D-H). The compositions are described in Table V. The procedure employed in Example 3 was also followed in catalyzing, curing and post-curing all of the compositions of Table V except formulations B and C. Formulations B and C were catalyzed as in Example 3, but were cured in an oven for 60 minutes at 60°C and 70°C, respectively, both followed by an overnight (16 hours) cure at 100°C. The physical properties of the cured polysiloxane resins are tabulated in Table VI. All of the cured resins had water-in-air contact angles greater than 80°. This was true even in formulation H which had 50 mole percent of $MAPSiO_{1.5}$ units in addition to 50 mole percent of $MAP(Me_2)SiO_{0.5}$ units.

Example 7

This Example illustrates the production of two-component acrylate-functional polysiloxane compositions. An acrylate-functional polysiloxane composition was prepared which contained 50 mole percent of $H_2C{=}CCH_3COO(CH_2)_3SiO_{1.5}$ units and 50 mole percent of $Me_2SiO$ units. This composition was mixed with a sufficient amount of a cross-linker of the formula $(HMe_2SiO)_3SiPh$ to give a ratio of one SiH to one $Si(CH_2)_2OOCCH_3C{=}CH_2$ in the mixture. Ten parts per

million of platinum were added to the mixture in the form of $[Bu_3PPtCl_2]_2$. The platinum-catalyzed mixture was cured in a mold for 2 hours at 100°C followed by 17 hours at 120°C and then post cured out of the mold for 16 hours at 140°C. The resulting optically clear cured resin contained 30 mole percent of $H_2C{=}CCH_3COO(CH_2)_3SiO_{1.5}$ units and had a calculated Me/Si ratio of 1.2. The cured resin had the following physical properties: water-in-air contact angle - 72°, flexural strength - 4,360 p.s.i., tangent modulus - 80,000 p.s.i. and secant modulus 71,000 p.s.i. Based upon the Me/Si ratio, it is expected that when the percent EOP value at 21°±2°C of the cured resin is determined, the EOP value will be at least 3%.

Example 8

The following formulations were prepared to demonstrate effects of including aliphatically unsaturated organic compounds with the previously described acrylate-functional polysiloxane compositions to form cured polysiloxane/organic copolymer resins useful in producing the lenses of the present invention. Table VII describes the physical properties of cured polysiloxane/organic copolymer resins obtained by mixing 25 and 50 weight percent of 2-hydroxyethyl methacrylate (HEMA) with the Acrylate-Functional Polysiloxane Compositions A, B and C and thereafter curing the mixture. Table VIII describes the physical properties of polysiloxane/organic copolymer resins obtained by mixing 10, 25 and 50 weight percent of methyl methacrylate (MMA) with Acrylate-Functional Polysiloxane Compositions D and E and thereafter curing the mixture. Runs 3, 4, 7, 8, 9, 10 and 11, inclusive,

are comparative examples. The flexural strength and modulus values increased as the amount of organic acrylate was increased while the oxygen permeability deceased. In Runs 1-9 which employed HEMA as the organic acrylate, when the amount of HEMA was increased beyond 25 weight percent and at 50 weight percent HEMA content, none of the samples either had or were expected to have EOP values of at least 3% at 0.1 mm thickness. The EOP values reported for Runs 14-17 were done by an independent outside laboratory at a different time than were the in-house measurements made in Runs 3-6 and 8 using a similar type of instrument. In Runs 14-17, the EOP values decreased with increasing amounts of MMA and had higher EOP values than did the copolymers of Runs 3-6 and 8. Formulations D and E had higher methyl/silicon ratios than did Compositions A and C and while Compositions B and E both had methyl/silicon ratios of 1, the former had a much higher level of $MAPSiO_{1.5}$ and was presumably more highly cross-linked than the copolymers of Composition E. Based upon these observations, it appears that the highest EOP values will be obtained by maximizing the methyl/silicon ratio of the polysiloxane composition and minimizing the level of acrylate-functional to the extent possible that is consistent with obtaining the desired amount of inherent wettability and level of physical properties in the cured polysiloxane/acrylate copolymer. It was also noted that the water absorption of the samples containing HEMA increased with increasing HEMA content while the samples containing MMA showed a very small increase in water absorption for the samples measured as the amount of MMA was

increased. The water absorption and % swell on hydration values reported are the ratio of the weight (length) value obtained for a hydrated (immersed at least 24 hours in distilled water at room temperature) sample to the weight (length) value obtained for the sample in the unhydrated state.

It should also be noted that Run 3 with 0% HEMA fell outside the required durometer level of 60 while the addition of 25 weight percent of HEMA to Composition C increased the durometer value from 56 to 91 and although the flexural strength was not actually measured, it is expected that the resin of Run 6 would have a flexural strength value greater than 3,500 p.s.i. based upon the flexural strength values obtained during the other runs. It should also be noted that the addition of 25 weight percent HEMA increased the physical properties of the cured resin from those observed with no HEMA added, but the water contact angle of Runs 4 and 5 differed very little from that observed for corresponding Runs 1 and 2, repectively.

The same observation can be made for Runs 10 and 12 in Table VIII where an acrylate-functional polysiloxane composition containing a rather high level of $Me_3SiO_{0.5}$ units (calculated Me/Si ratio of 1.75) to maximize the oxygen permeability of the cured resin was employed. The physical properties of the cured resin in Run 10 were too weak to measure, yet the addition of 10 weight percent of MMA resulted in the cured resin of Run 12 which had improved physical properties.

The cured polysiloxane/organic copolymer resins described in Table VII were prepared by mixing the indicated weight percentages of HEMA and each

acrylate-functional polysiloxane composition together and then adding 0.25 weight percent of benzoyl peroxide catalyst to the mixture. The catalyzed mixture was placed in a mold and heated in an oven for 24 hours at 50°C and then removed from the mold and post cured out of the mold for an additional 16 hours at 75°C.

The cured polysiloxane/organic copolymer resins described in Table VIII were prepared by mixing the indicated weight percentages of MMA and each acrylate-functional polysiloxane composition together and then adding 0.25 weight percent of benzoyl peroxide catalyst to the mixture. The catalyzed mixture was placed in a mold and heated in an oven for 62 hours (over a weekend) at 40°C and then removed from the mold and post cured out of the mold for an additional 16 hours at 100°C.

Table I

| | $MAPSiO_{1.5}$ | $PhSiO_{1.5}$ | PhMeSiO | $Me_2SiO$ | Me/Si | D.S. |
|---|---|---|---|---|---|---|
| A | 100 | - | - | - | 0 | 0 |
| B | 100 | - | - | - | 0 | 0 |
| C | 40 | - | 30 | 30 | 0.9 | 1.2 |
| D | 25 | - | - | 75 | 1.5 | 1.5 |

Table II

| | C/A* (°) | EOP (21°±2°C @ 0.1 mm) | Durometer (Shore D) | Flexural Strength (p.s.i.) | Tangent Modulus (p.s.i.) | Secant Modulus (p.s.i.) |
|---|---|---|---|---|---|---|
| A | 65 | 3.2% | - | 6750 | 250,000 | 250,000 |
| B | 69 | - | 87 | 6110 | 195,000 | 195,000 |
| C | 74 | 10.0% | 85 | 6224 | 179,000 | 179,000 |
| D | 84 | 15.2% | - | ** | ** | ** |

* Advancing water-in-air contact angle on dry (unhydrated) resin

** Too weak to measure

Table III

| | $MAPSiO_{1.5}$ | $PhSiO_{1.5}$ | $(Ph)_2SiO$ | PhMeSiO | $Me_2SiO$ |
|---|---|---|---|---|---|
| A | 58 | - | - | - | - |
| B | 50 | - | - | 50 | - |
| C | 40 | 20 | - | - | 40 |
| D | 40 | - | 30 | - | 30 |
| E | 40 | - | - | 20 | 40 |
| F | 35 | - | 35 | - | - |
| G | 35 | - | 20 | - | 45 |
| H | 33.3 | - | 33.3 | - | 33.3 |
| I | 35 | 20 | 10 | - | - |
| J | 35 | 20 | 10 | - | - |
| EX. 1* | 50 | - | - | - | 50 |

*Composition of Example 1 above

Table III (cont.)

| | $Me_3SiO_{0.5}$ | $PrSiO_{1.5}$ | $(F_3Pr)MeSiO$ | Me/Si |
|---|---|---|---|---|
| A | 42 | - | - | 1.26 |
| B | - | - | - | 0.5 |
| C | - | - | - | 0.8 |
| D | - | - | - | 0.6 |
| E | - | - | - | 1.0 |
| F | 30 | - | - | 0.9 |
| G | - | - | - | 0.9 |
| H | - | - | - | 0.66 |
| I | 25 | 10 | - | 0.75 |
| J | 25 | - | 10 | 0.85 |
| EX. 1* | - | - | - | 1.0 |

* Composition of Example 1 above

Table IV

| | C/A* (°) | Durometer (Shore D) | Flexural Strength (p.s.i.) | Tangent Modulus (p.s.i.) | Secant Modulus (p.s.i.) | D.S.** (calc.) |
|---|---|---|---|---|---|---|
| A | 70 | - | 4600 | 163,000 | 163,000 | 1.26 |
| B | 60 | 89 | 6570 | 220,000 | 220,000 | 1.0 |
| C | 74 | 86 | 6780 | 149,000 | 149,000 | 1.0 |
| D | 74 | 86 | 5214 | 220,000 | 220,000 | 1.2 |
| E | 78 | 87 | 5930 | 168,000 | 168,000 | 1.2 |
| F | 78 | 83 | 4224 | 150,000 | 150,000 | 1.6 |
| G | 78 | 85 | 5590 | 172,000 | 172,000 | 1.3 |
| H | 74 | 83 | 4855 | 165,000 | 165,000 | 1.3 |
| I | 79 | 89 | 4000 | 210,000 | 210,000 | 1.25 |
| J | 80 | 89 | 3800 | 210,000 | 210,000 | 1.35 |
| EX. 1 | 70 | - | 4600 | 210,000 | 210,000 | 1.0 |

* Water-in-air contact angle on dry (unhydrated) resin
** Degree of substitution (calculated)
\- Not measured

Table V

| | $MAPSiO_{1.5}$ | MAP(Me)SiO | $MAP(Me_2)SiO_{0.5}$ | $PhSiO_{1.5}$ | $Ph_2SiO$ | $Me_2SiO$ | $Me_3SiO$ | Me/Si |
|---|---|---|---|---|---|---|---|---|
| A | 25 | - | - | 50 | 10 | 15 | - | 0.3 |
| B | 25 | - | - | 25 | - | 40 | 10 | 1.1 |
| C | 15 | - | - | 30 | - | 50 | 5 | 1.15 |
| D | - | 40 | - | 30 | - | 20 | 10 | 1.1 |
| E | - | 30 | - | 20 | - | 40 | 10 | 1.4 |
| F | - | 25 | - | 50 | 10 | 15 | - | 0.55 |
| G | - | - | 100 | - | - | - | - | 2.0 |
| H | 50 | - | 50 | - | - | - | - | 1.0 |

Table VI

| | C/A* (°) | Durometer (Shore D) | Flexural Strength (p.s.i.) | Tangent Modulus (p.s.i.) | Secant Modulus (p.s.i.) |
|---|---|---|---|---|---|
| A | 95 | - | - | - | - |
| B | 104 | 83 | - | - | - |
| C | 110 | 74 | - | - | - |
| D | 95 | - | 4900 | 143,000 | 135,000 |
| E | 95 | - | 4100 | 100,000 | 85,000 |
| F | 99 | - | 6240 | 222,000 | 222,000 |
| G | 99 | - | 6000 | 119,000 | 66,000 |
| H | 95 | - | 6850 | 252,000 | 252,000 |

* Water-in-air contact angle on dry (unhydrated) resin

\- Not measured

Table VII

| | | | | | | | | | |
|---|---|---|---|---|---|---|---|---|---|
| **Formulation:** | | | | | | | | | |
| Weight % Acrylate: | 0% HEMA | | | 25% HEMA | | | 50% HEMA | | |
| Polysiloxane Composition: | A | B | C | A | B | C | A | B | C |
| Run No.: | 1 | 2 | 3 | 4 | 5 | 6 | 7 | 8 | 9 |
| **Physical Properties:** | | | | | | | | | |
| Flexural Strength (p.s.i.) | 5000 | 4000 | - | 12000 | 7000 | - | - | - | - |
| Tangent Modulus (p.s.i. x $10^5$) | 1.08 | 1.95 | - | 3.35 | 2.96 | - | - | - | - |
| Secant Modulus (p.s.i. x $10^5$) | 0.9 | 1.95 | - | 2.9 | 2.8 | - | - | - | - |
| Durometer (Shore D)-dry | 71 | 86 | 56 | 89 | 88 | 91 | 88 | 91 | 89 |
| Durometer (Shore D)-hydrated | 71 | 86 | 56 | 91 | 90 | 90 | 90 | 90 | 88 |

Table VII (cont.)

| | | | | | | | | | |
|---|---|---|---|---|---|---|---|---|---|
| % Water Absorption | 0 | 0 | 0 | 2 | 2.5 | 3 | 7 | 7 | 8 |
| % Swell on Hydration | 0 | 0 | 0 | 0 | 0 | 0 | - | 2 | - |
| C/A* (°) | 67 | 76 | 78 | 67 | 73 | 67 | 55 | 52 | 57 |
| % EOP (21°±2°C @ 0.1 mm) | - | - | 9.3 | 2 | 3 | 3 | - | 0.3 | - |

---

* Advancing water-in-air contact angle on dry (unhydrated) resin

\- Not measured

HEMA = 2-Hydroxylethyl Methacrylate

Formulation of Polysiloxane Compositions (mole percent):

A = 50% $MAPSiO_{1.5}$, 25% $Me_2SiO$ and 25% $PhSiO_{1.5}$;

B = 50% $MAPSiO_{1.5}$ and 50% $Me_2SiO$;

C = 33.3% $MAPSiO_{1.5}$, 33.3% $Me_2SiO$ and 33.3% $PhSiO_{1.5}$.

Table VIII

| | | | | | | | | |
|---|---|---|---|---|---|---|---|---|
| <u>Formulation:</u> | | | | | | | | |
| Weight % Acrylate: | 0% MMA | | 10% MMA | | 25% MMA | | 50% MMA | |
| Polysiloxane Composition: | D | E | D | E | D | E | D | E |
| Run No.: | 10 | 11 | 12 | 13 | 14 | 15 | 16 | 17 |
| <u>Physical Properties:</u> | | | | | | | | |
| Flexural Strength (p.s.i.) | ** | - | 4716 | 8361 | 10170 | 10940 | 12261 | 17437 |
| Tangent Modulus (p.s.i. x $10^5$ ) | ** | - | 1.4 | 2.0 | 2.0 | 2.6 | 2.1 | 3.2 |
| Secant Modulus (p.s.i. x $10^5$ ) | ** | - | 1.4 | 1.4 | 1.4 | 1.9 | 1.2 | 2.1 |
| Durometer (Shore D)-dry | - | - | 80 | 80 | 90 | 90 | 90 | 90 |
| Durometer (Shore D)-hydrated | - | - | - | - | - | - | - | - |

Table VIII (cont.)

| | | | | | | | | |
|---|---|---|---|---|---|---|---|---|
| % Water Absorption | - | - | 0.11 | 0.11 | 0.18 | 0.18 | 0.77 | - |
| % Swell on Hydration | - | - | - | - | - | - | - | - |
| C/A* (°) | - | - | 80 | 80 | 77 | 79 | 77 | 77 |
| % EOP (20°C @ 0.1 mm)*** | - | - | - | - | 12.4 | 9.5 | 7.0 | 5.5 |
| (35°C @ 0.1 mm)*** | - | - | - | - | 14.3 | 11.7 | 8.8 | 6.8 |
| DK Value x $10^{-11}$ | | | | | | | | |
| (20°C)*** | - | - | - | - | 11.8 | 7.4 | 4.7 | 3.3 |
| (35°C)*** | - | - | - | - | 18.1 | 11.6 | 5.8 | 3.9 |

* Advancing water-in-air contact angle on dry (unhydrated) resin

** Too weak to measure

*** The first value was measured at 20°C, the second value was at 35°C. The units for DK x $10^{-11}$ are $\frac{cm^3 \cdot cm}{cm^2 \cdot sec \cdot mm\ Hg}$; it is common to express the pressure in mm Hg rather than cm Hg when referring to measurements made on contact lenses; the latter DK value (in cm Hg) can be obtained by multiplying the reported DK value by 10.

Table VIII (cont.)

\- Not measured

MMA = Methyl Methacrylate

Formulation of Polysiloxane Compositions (mole percent):

D = 35% $MAPSiO_{1.5}$, 20% $Me_2SiO$ and 45% $Me_3SiO_{0.5}$.

E = 33.3% $MAPSiO_{1.5}$, 33.3% $Ph_2SiO$ and 33.3% $Me_3SiO_{0.5}$

Claims:

1. As an optical device, a lens to be worn against or inside the eye which is inherently wettable by human tear fluid and possesses an oxygen gas permeability coefficient of at least $2 \times 10^{-10}$ $(cm^3 \cdot cm)/(cm^2 \cdot sec \cdot cm\ Hg)$ which results in a calculated open eye Equivalent Oxygen Performance of at least 3 percent at 0.1 mm thickness at 21°±2°C, said lens consisting essentially of an optically clear biocompatible cured polysiloxane resin having a flexural strength value of at least 3,500 p.s.i. and durometer value of at least 60 on the Shore D scale in the unhydrated state at 21°±2°C and having an advancing water-in-air contact angle value not greater than 80° at 21°±2°C in the unhydrated state, said resin having been prepared by curing an acrylate-functional polysiloxane composition containing at least 30 mole percent of acrylate-functional siloxane units of the unit formula $H_2C=CRCOOR'SiO_{1.5}$, where said mole percentage is based upon the total moles of siloxane units present in said polysiloxane composition, essentially any remaining siloxane units present in said composition being selected from the group consisting of siloxane units of the unit formula $R''SiO_{1.5}$, $R''_2SiO$ and $R''_3SiO_{0.5}$, wherein R is a methyl radical or hydrogen, R' is a divalent alkylene radical of from 1 to 4 inclusive carbon atoms, and each R" is selected from the group consisting of alkyl radicals of from 1 to 3 inclusive carbon atoms, haloalkyl radicals of from 1 to 3 inclusive carbon atoms, phenyl radicals and hydrogen.

2. As an optical device, a lens to be worn against or inside the eye which is inherently wettable by human tear fluid and possesses an oxygen gas permeability coefficient (DK) value of at least $2 \times 10^{-10}$ $(cm^3 \cdot cm)/(cm^2 \cdot sec \cdot cm\ Hg)$ which results in a calculated open eye Equivalent Oxygen Performance of at least 3 percent at 0.1 mm thickness at 21°±2°C, said lens consisting essentially of an optically clear biocompatible cured polysiloxane/organic copolymer resin having a flexural strength value of at least 3,500 p.s.i. and a durometer value of at least 60 on the Shore D scale in the unhydrated state at 21°±2°C and having an advancing water-in-air contact angle value not greater than 80° at 21°±2°C in the unhydrated state, said resin having been prepared by curing a compatible mixture consisting essentially of

(A) an acrylate-functional polysiloxane composition containing at least 30 mole percent of acrylate-functional siloxane units of the unit formula $H_2C{=}CRCOOR'SiO_{1.5}$, where said mole percentage is based upon the total moles of siloxane units present in said polysiloxane composition, essentially any remaining siloxane units present in said composition being selected from the group consisting of siloxane units of the unit formula $R''SiO_{1.5}$, $R''_2SiO$ and $R''_3SiO_{0.5}$, wherein R is a methyl radical or hydrogen, R' is a divalent alkylene radical of from 1 to 4 inclusive carbon atoms, and each R" is selected from the group consisting of alkyl radicals of from 1 to 3 inclusive carbon atoms, haloalkyl radicals of from

1 to 3 inclusive carbon atoms, phenyl radicals and hydrogen and

(B) up to 60 weight percent, based upon the total weight of the mixture, of at least one aliphatically unsaturated organic compound that is free of silicon atoms and has a molecular weight of less than 200,

there being no $\equiv$SiH siloxane units present in said mixture when a compound capable of providing -OH radicals is included in the mixture.

3. A composition of matter consisting essentially of an acrylate-functional polysiloxane composition containing at least 30 mole percent of acrylate-functional siloxane units of the unit formula $H_2C{=}CRCOOR'SiO_{1.5}$, where said mole percentage is based upon the total moles of siloxane units present in said polysiloxane composition, essentially any remaining siloxane units present in said composition being selected from the group consisting of siloxane units of the unit formula $R''SiO_{1.5}$, $R''_2SiO$, and $R'_3SiO_{0.5}$, wherein R is a methyl radical or hydrogen, R' is a divalent alkylene radical of from 1 to 4 inclusive carbon atoms, and each R" is selected from the group consisting of alkyl radicals of from 1 to 3 inclusive carbon atoms, haloalkyl radicals of from 1 to 3 inclusive carbon atoms, phenyl radicals and hydrogen, said composition being curable to an optically clear polysiloxane resin having a flexural strength of at least 3,500 p.s.i., a durometer value of at least 60 on the Shore D scale at 21°±2°C, and advancing water-in-air contact angle no greater than 80°C at

21°±2°C in the unhydrated state and an oxygen gas permeability coefficient (DK) value of at least $2 \times 10^{-10}$ $(cm^3 \cdot cm)/(cm^2 \cdot sec \cdot cm\ Hg)$ which results in a calculated open eye Equivalent Oxygen Performance of at least 3 percent at 0.1 mm thickness at 21°±2°C.

4. A composition of matter consisting essentially of a compatible mixture of

(A) an acrylate-functional polysiloxane composition containing at least 30 mole percent of acrylate-functional siloxane units of the unit formula $H_2C{=}CRCOOR'SiO_{1.5}$, where said mole percentage is based upon the total moles of siloxane units present in said polysiloxane composition, essentially any remaining siloxane units present in said composition being selected from the group consisting of siloxane units of the unit formula $R''SiO_{1.5}$, $R''_2SiO$, and $R''_3SiO_{0.5}$, wherein R is a methyl radical or hydrogen, R' is a divalent alkylene radical of from 1 to 4 inclusive carbon atoms, and each R" is selected from the group consisting of alkyl radicals of from 1 to 3 inclusive carbon atoms, haloalkyl radicals of from 1 to 3 inclusive carbon atoms, phenyl radicals and hydrogen and

(B) up to 60 weight percent, based upon the total weight of the mixture, of at least one aliphatically unsaturated organic compound that is free of silicon atoms and has a molecular weight of less than 200, there being no $\equiv$SiH siloxane units present in said mixture when a compound

capable of providing -OH radicals is included in the mixture, said mixture being curable to an optically clear polysiloxane/organic copolymer resin having a flexural strength of at least 3,500 p.s.i., a durometer value of at least 60 on the Shore D scale at 21°±2°C, an advancing water-in-air contact angle no greater than 80°C at 21°±2°C in the unhydrated state and an oxygen gas permeability coefficient (DK) value of at least $2 \times 10^{-10}$ $(cm^3 \cdot cm)/(cm^2 \cdot sec \cdot cm\ Hg)$ which results in a calculated open eye Equivalent Oxygen Performance of at least 3 percent at 0.1 mm thickness at 21°±2°C.